(19) 

Europäisches
Patentamt
European
Patent Office
Office européen
des brevets

(11) **EP 4 383 510 A2**

(12) **EUROPEAN PATENT APPLICATION**

(43) Date of publication:
**12.06.2024   Bulletin 2024/24**

(21) Application number: **23210089.1**

(22) Date of filing: **15.11.2023**

(51) International Patent Classification (IPC):
*H02J 7/00* (2006.01)       *H01M 10/44* (2006.01)

(52) Cooperative Patent Classification (CPC):
**H02J 7/0013; H01M 10/441; H02J 7/00714;**
H02J 7/0025; H02J 7/0063

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **05.12.2022   CN 202211545885**

(71) Applicant: **Huawei Digital Power Technologies
Co., Ltd.
Shenzhen, 518043 (CN)**

(72) Inventors:
• **ZHU, Jianhua**
**Shenzhen, Guangdong (CN)**
• **ZHENG, Mugui**
**Shenzhen, Guangdong (CN)**
• **HUANG, Yong**
**Shenzhen, Guangdong (CN)**
• **HU, Junlin**
**Shenzhen, Guangdong (CN)**

(74) Representative: **Maiwald GmbH
Engineering
Elisenhof
Elisenstrasse 3
80335 München (DE)**

(54) **POWER SUPPLY MANAGEMENT SYSTEM, BATTERY MANAGEMENT METHOD, POWER SYSTEM, AND POWER DEVICE**

(57)     A power supply management system includes a monitoring module and a plurality of battery modules. The battery module includes a BMS, a DC/DC converter, and a plurality of battery packs. When the battery packs of the plurality of battery modules are charged or discharged by using the DC/DC converter, the monitoring module may detect charge/discharge rates of the battery modules, and when the charge/discharge rates of the battery modules are less than a specified threshold, control a part of battery modules that are being charged or discharged to stop being charged or discharged. After a quantity of battery modules that are being charged or discharged is decreased, the charge/discharge rates are increased. When the charge/discharge rates of the battery modules that are being charged or discharged are increased to a specified range, conversion efficiency of the power supply management system is high, so that the conversion efficiency of the power supply management system is improved.

EP 4 383 510 A2

## Description

## TECHNICAL FIELD

The present invention relates to the field of battery management technologies, and in particular, to a power supply management system, a battery management method, a power system, and a power device.

## BACKGROUND

A plurality of battery modules are deployed in a power device, for example, an outdoor cabinet, a communication base station, or a new energy vehicle. The plurality of battery modules are connected in series and/or in parallel, to supply electric energy to a load or to be charged together. Power consumption components such as a power switching transistor, an operational amplifier, a communication transceiver, and a processor are disposed in the battery module. In a charging or discharging process of the plurality of battery modules, the power consumption components of the plurality of battery modules consume a part of electric energy, and consequently, electric energy utilization of the entire power device is reduced. Therefore, how to improve electric energy utilization of the entire power device is an urgent problem that needs to be resolved currently.

## SUMMARY

To resolve the foregoing problem, an embodiment of this application provides a power supply management system. The power supply management system may determine, based on power of a load, a quantity of battery modules, and a specified range of a charge/discharge rate of the battery module, that a corresponding quantity of battery modules are in a working mode, and supply power to the load. The power supply management system controls another battery module to be in a sleep mode or a deep sleep mode, so that electric energy consumption of the power supply management system can be reduced, and conversion efficiency of the power supply management system can be improved. In addition, this application further provides embodiments of a battery management method, a power system, and a power device that are corresponding to the power supply management system.

Therefore, the following technical solutions are used in embodiments of this application.

According to a first aspect, this application provides a power supply management system, including: a plurality of battery modules, where each battery module includes a battery management system, a direct current/direct current converter, and at least one battery pack, and the battery management system is electrically connected to both the direct current/direct current converter and the at least one battery pack, and is configured to: control the direct current/direct current converter to convert a direct current output by the at least one battery pack into a direct current at a specified voltage, and/or convert a received direct current into a direct current at a specified voltage, and supply power to the at least one battery pack; and a monitoring module, communicatively connected to the battery management systems of the plurality of battery modules, and configured to: when discharge rates of the plurality of battery modules are less than a first specified threshold, control a part of battery modules that are being discharged to stop being discharged; and/or when charge rates of the plurality of battery modules are less than a second specified threshold, control a part of battery modules that are being charged to stop being charged.

In this implementation, when the battery packs of the plurality of battery modules are charged or discharged by using the DC/DC converter, the monitoring module may detect the charge/discharge rate of the battery module, and when the charge/discharge rate of the battery module is less than a specified threshold, may decrease a quantity of battery modules that are being charged or discharged. After the quantity of battery modules that are being charged or discharged is decreased, the charge/discharge rate is increased. When the charge/discharge rate of the battery module that is being charged or discharged is increased to a specified range, conversion efficiency of the power supply management system is high, so that the conversion efficiency of the power supply management system is improved.

In an implementation, the discharge rates of the battery modules are the same, and/or the charge rates of the battery modules are the same.

In this implementation, the plurality of battery modules of the power supply management system are charged or discharged at a same charge/discharge rate, so that the monitoring module manages the battery modules in a unified manner. This reduces control difficulty of the monitoring module.

In an implementation, the monitoring module is further configured to enable the battery module that stops being charged or discharged to be in a sleep mode. The sleep mode is a mode in which a power switching transistor, an inductor, and a transformer that are of the direct current/direct current converter of the battery module and that control the battery pack to be discharged or charged are not powered on.

In this implementation, the monitoring module may enable the battery module that stops being charged or discharged to enter the sleep mode. In this case, components, such as the power switching transistor, the inductor, and the transformer that are of the DC/DC converter of the battery module and that control the battery pack to be charged or discharged are not powered on, so that energy consumption of the power supply management system can be reduced, and conversion efficiency of the power supply management system can be improved.

In an implementation, the battery management system is further configured to: when it is detected that an output electrical signal of the battery module that is being discharged is less than a third specified threshold, power on the power switching transistor, the inductor, and the transformer of the direct current/direct current converter of the battery module in the sleep mode.

In this implementation, if the monitoring module enables the battery module in the sleep mode to exit the sleep mode in a communication wake-up manner, because communication delay time of the monitoring module is long, or even a communication link is disconnected, a voltage of a discharge port of the battery module may not be rapidly increased after being decreased, and the load powered by the power supply management system may not work or even be directly turned off. This reduces reliability of the power supply management system. The battery module in the sleep mode may actively detect a voltage of a discharge output port, and when the voltage of the discharge output port is less than a specified threshold, may actively enable the direct current/direct current converter to work, so that the battery module supplies power. In this way, reaction time of the power supply management system is increased, and reliability of the power supply management system is improved.

In an implementation, the monitoring module is further configured to enable the battery module in the sleep mode to be in a deep sleep mode. The deep sleep mode is a mode in which the power switching transistor, the inductor, and the transformer that are of the direct current/direct current converter of the battery module and that control a battery pack to be discharged or charged, and coils of a relay and a contactor are not powered on.

In this implementation, the battery management system may enable a part of battery modules in the sleep mode to enter the deep sleep mode. In this case, the components such as the power switching transistor, the inductor, and the transformer that are of the DC/DC converter electrically connected to the battery module and that control charging or discharging, and coils of the relay and the contactor are not powered on. Compared with the sleep mode, the deep sleep mode which the battery module is in can further reduce energy consumption of the power supply management system, and greatly improve conversion efficiency of the power supply management system.

In an implementation, the monitoring module is further configured to: when the discharge rate of the battery module that is being discharged is greater than a fourth specified threshold, send a wake-up signal to the battery module in the sleep mode, where the wake-up signal indicates the battery module in the sleep mode to supply electric energy to a load.

In an implementation, the monitoring module is further configured to: when the discharge rates of the plurality of battery modules are greater than the fourth specified threshold, send a management signal to another power supply system, where the management signal indicates the another power supply system to supply electric energy to the load.

In this implementation, after all battery modules of the power supply management system are discharged, if discharge power of all the battery modules is less than power of the load, the discharge rates of the battery modules may be greater than a specified threshold, and consequently, the power supply management system cannot work at optimal discharge efficiency. The power supply management system enables another power supply system to supply all or part of the electric energy. When the another power supply system and the power supply management system supply power to the load together, electric energy supplied by the battery module is reduced, so that the discharge rate of the battery module can be decreased to a specified range. This improves discharge efficiency of the power supply management system.

In an implementation, the monitoring module is further configured to: detect states of health of the plurality of battery modules; and enable a battery module whose state of health is less than a fifth specified threshold to be in the sleep mode.

In this implementation, the power supply management system detects the state of health of the battery module. When determining that the state of health of the battery module that is being discharged is less than a specified threshold, the power supply management system enables the battery module whose state of health is less than the fifth specified threshold to stop being discharged. The power supply management system may preferably select, based on the states of health of the battery modules, a battery module with a larger state of health to supply power to the load, so that the states of health of the battery modules of the power supply management system are consistent, to improve reliability of the power supply management system.

In an implementation, the monitoring module is further configured to: detect states of charge of the plurality of battery modules; and enable a battery module whose state of charge is less than a sixth specified threshold to be in the sleep mode, and enable the battery module that is already in the sleep mode to supply electric energy to the load.

In this implementation, the power supply management system detects the states of charge of the plurality of battery modules. When determining that a state of charge of the battery module that is being discharged is less than a specified threshold, the power supply management system enables the battery module whose state of charge is less than the specified threshold to stop being discharged, and enables a battery module that is no longer in the sleep mode or the deep sleep mode to be discharged. When the state of charge of the battery module is less than the specified threshold, the battery module may stop being discharged. To avoid a problem like power-off or voltage fluctuation of the power supply management system after the state of charge of the battery module is decreased to 0, the power supply management system wakes up the battery module in the sleep mode in advance to be discharged, and enables the battery module whose state of charge is less than the specified threshold to stop being discharged.

According to a second aspect, this application provides a battery management method, where a power supply management system includes a plurality of battery modules and a monitoring module, the monitoring module is communicatively connected to the plurality of battery modules, and the method is executed by the monitoring module, and includes: controlling the plurality of battery modules to be discharged; detecting discharge rates of the plurality of battery modules; and when it is determined that the discharge rates of the plurality of battery modules are less than a first specified threshold, controlling a part of battery modules that are being discharged to stop being discharged

In an implementation, the method further includes: when the discharge rate of the battery module that is being discharged is greater than a fourth specified threshold, sending a wake-up signal to a battery module in a sleep mode and/or a deep sleep mode, where the wake-up signal indicates the battery module in the sleep mode to supply electric energy to a load, and the sleep mode is a mode in which a power switching transistor, an inductor, and a transformer that are of a direct current/direct current converter and that control the battery module to be discharged or charged are not powered on; and the deep sleep mode is a mode in which the power switching transistor, the inductor, and the transformer that are of the direct current/direct current converter of the battery module and that control a battery pack to be discharged or charged, and coils of a relay and a contactor are not powered on.

In an implementation, the method further includes: when the discharge rates of the plurality of battery modules are greater than a fourth specified threshold, sending a management signal to another power supply system, where the management signal indicates the another power supply system to supply electric energy to the load.

In an implementation, the method further includes: detecting states of health of the plurality of battery modules; and controlling a battery module whose state of health is less than a fifth specified threshold to be in the sleep mode.

In an implementation, the method further includes: detecting states of charge of the plurality of battery modules; and controlling a battery module whose state of charge is less than a sixth specified threshold to be in the sleep mode, and enabling the battery module that is already in the sleep mode to supply electric energy to the load.

According to a third aspect, this application provides a battery management method, where a power supply management system includes a plurality of battery modules and a monitoring module, the monitoring module is communicatively connected to the plurality of battery modules, and the method is executed by the monitoring module, and includes: controlling the plurality of battery modules to be charged; detecting charge rates of the plurality of battery modules; and when it is determined that the charge rates of the plurality of battery modules are less than a second specified threshold, controlling a part of battery modules that are being charged to stop being charged.

According to a fourth aspect, this application provides a power system, including: an input/output busbar; at least one load, electrically connected to the input/output busbar; at least one power supply management system according to at least one possible implementation of the first aspect, electrically connected to the input/output busbar, and configured to supply electric energy to the at least one load; and a power supply system, electrically connected to the input/output busbar, and configured to supply electric energy to the at least one battery module and/or the at least one load.

According to a fifth aspect, this application provides a power device, including: an input/output busbar; at least one load, electrically connected to the input/output busbar; at least one power supply management system according to at least one possible implementation of the first aspect, electrically connected to the input/output busbar, and configured to supply electric energy to the at least one load; and at least one power interface, electrically connected to the input/output busbar, and configured to receive electric energy of another external power supply.

**BRIEF DESCRIPTION OF DRAWINGS**

The following briefly describes the accompanying drawings that need to be used in the descriptions of embodiments or a conventional technology.

FIG. 1(a) is a schematic diagram of a relationship between charge/discharge efficiency of a battery module and a charge/discharge rate of the battery module;

FIG. 1(b) is a schematic diagram of a relationship between conversion efficiency of a DC/DC converter and a charge/discharge rate of a battery module;

FIG. 1(c) is a schematic diagram of a relationship between conversion efficiency of a battery module and a charge/discharge rate of the battery module;

FIG. 2 is a schematic diagram of an architecture of a power system according to an embodiment of this application;

FIG. 3 is a schematic diagram of an architecture of a power device according to an embodiment of this application;

FIG. 4 is a schematic diagram of an architecture of a battery module according to an embodiment of this application;

FIG. 5 is a schematic diagram of an architecture of a battery module according to an embodiment of this application;

FIG. 6 is a schematic diagram of an architecture of a monitoring module according to an embodiment of this application;

FIG. 7 is a flowchart of a battery management method according to an embodiment of this application; and

FIG. 8 is a flowchart of a battery management method according to an embodiment of this application.

## DESCRIPTION OF EMBODIMENTS

The following describes the technical solutions in embodiments of this application with reference to the accompanying drawings in embodiments of this application.

In descriptions of this application, locations or location relationships indicated by terms "center", "up", "down", "in front of", "behind", "left", "right", "vertical", "horizontal", "top", "bottom", "inside", "outside", and the like are based on locations or location relationships shown in the accompanying drawings, and are merely intended for ease of describing this application and simplifying descriptions, instead of indicating or implying that a mentioned apparatus or component needs to be provided on a specific location or constructed and operated on a specific location, and therefore shall not be understood as limitations on this application.

In the descriptions of this application, it should be noted that, unless otherwise clearly specified and limited, terms "mount", "link", and "connect" should be understood in a broad sense, for example, may mean a fixed connection, may be a detachable connection, or may be a butt joint connection or an integrated connection. A person of ordinary skill in the art can understand specific meanings of the foregoing terms in this application based on specific cases.

The term "and/or" in the descriptions of this application describes an association relationship for describing associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the descriptions of this application, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, a word like "in an embodiment" or "for example" is used to represent giving an example, an illustration, or a description. Any embodiment or design scheme described as "in an embodiment" or "for example" in embodiments of this application should not be explained as being more preferred or having more advantages than another embodiment or design scheme. Exactly, use of the word like "in an embodiment" or "for example" is intended to present a related concept in a specific manner.

In the descriptions of this specification, the described specific features, structures, materials, or characteristics may be combined in a proper manner in any one or more of embodiments or examples.

A battery cell is a minimum maintainable unit that includes one cell or several cells connected in parallel. A battery pack is a combination of a plurality of battery cells that are connected in series and/or in parallel. A battery module consists of a plurality of battery packs, a battery management system (battery management system, BMS), a low-voltage power distribution device, a mechanical part, and the like. The BMS of the battery module has functions such as collecting a voltage of each battery cell, a temperature of the battery cell, a total voltage of the battery packs, a total current of the battery packs, a state of health (state of health, SOH) of the battery module, and a state of charge (state of charge, SOC) of the battery module, and controlling a connection or a disconnection of a charging circuit of the battery pack and a discharging circuit of the battery pack.

When the battery module supplies power to a load, each battery pack is discharged. During discharge of the battery packs, the total voltage of the battery packs decreases as the SOC decreases. A direct current/direct current (direct current/direct current, DC/DC) converter is connected to an output end of the battery module, to maintain stability of an output voltage of the battery module. When the total voltage of the battery modules decreases, the BMS of the battery module may control the DC/DC converter to boost the output voltage of the battery module, so that the total voltage output by the battery module remains constant or fluctuates within a specified range.

A charge/discharge rate is a current value required when the battery module is discharged by a rated capacity of the battery module within specified time. The charge/discharge rate is a multiple of the rated capacity of the battery module. The charge/discharge rate of the battery module is related to a charge/discharge current of the battery module and a total rated capacity of battery packs of the battery module, that is,

$$I_0 = \frac{I}{C}$$

Herein, $I_0$ represents the charge/discharge rate of the battery module, I represents the charge/discharge current of the battery module, and C represents the total rated capacity of the battery packs of the battery module.

In an embodiment, when a battery module with a total rated capacity of 100 mAh is discharged at a discharge current of 20 mA, a charge/discharge rate of the battery module is 0.2C.

The charge/discharge rate is divided into a charge rate and a discharge rate. The charge rate is a ratio of a current generated when the battery pack of the battery module is charged to the rated capacity of the battery module. The discharge rate is a ratio of a current generated when the battery pack of the battery module is discharged to the rated capacity of the battery module.

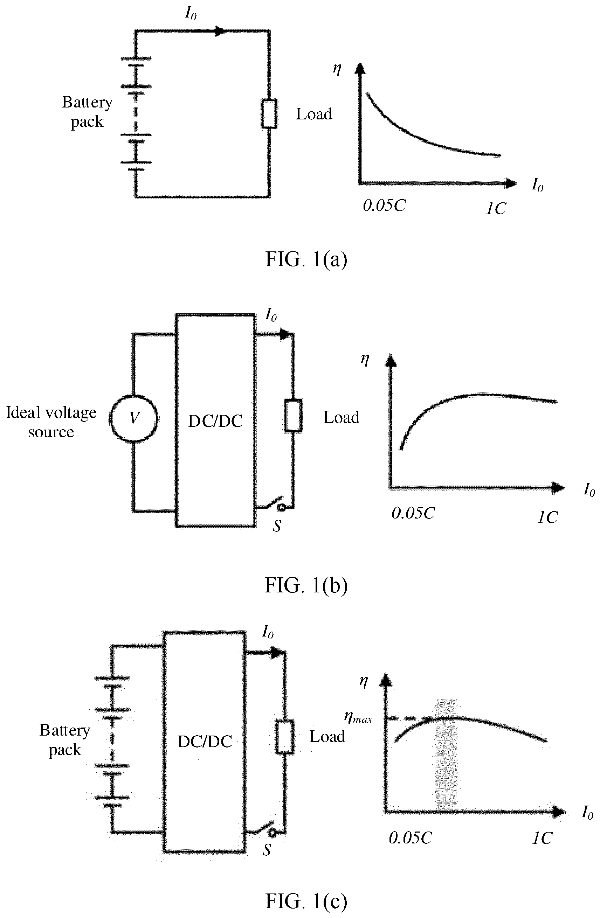

When the plurality of battery packs of the battery module are charged or discharged, a smaller charge/discharge rate of the battery module indicates more sufficient conversion between chemical energy and electric energy of battery cells of the plurality of battery packs of the battery module, and higher charge/discharge efficiency of the battery module. In an embodiment, based on simulation experimental data shown in FIG. 1(a), a function relationship between charge/discharge efficiency $\eta_1$ of the battery module and a charge/discharge rate $I_0$ of the battery module is an inverse proportional function.

When the DC/DC converter converts a direct current, there are several fixed losses. For example, a static current generated during working of an integrated circuit (integrated circuit, IC) like a microcontroller unit (microcontroller unit, MCU) that controls the DC/DC converter, an operational amplifier, and a communication transceiver generates an electric energy loss. An excitation current generated when magnetic components such as a transformer and an inductor establish magnetic fields causes an electric energy loss. A power switching transistor generates a drive loss when performing a high-frequency on/off action. Coils of components such as a relay and a contactor of the DC/DC converter generate a drive loss.

The several fixed losses of the DC/DC converter are irrelevant to the charge/discharge rate of the battery module. Therefore, a smaller charge/discharge rate of the battery module does not necessarily indicate the highest conversion efficiency of the DC/DC converter. In an embodiment, based on the simulation experimental data shown in FIG. 1(b), a function relationship between conversion efficiency $\eta_2$ of the DC/DC converter and the charge/discharge rate $I_0$ of the battery module is a parabolic function.

When the battery module is charged or discharged, the conversion efficiency $\eta$ of the battery module is a product of the charge/discharge efficiency $\eta 1$ of the battery module and the conversion efficiency $\eta_2$ of the DC/DC converter. A relationship between conversion efficiency $\eta$ of the battery module and the charge/discharge rate $I_0$ of the battery module is obtained by multiplying a relational value between the charge/discharge efficiency $\eta_1$ of the battery module and the charge/discharge rate $I_0$ of the battery module and a relational value between the conversion efficiency $\eta_2$ of the DC/DC converter and the charge/discharge rate $I_0$ of the battery module. That is, a curve in FIG. 1(a) is superposed with a curve in FIG. 1(b), to obtain the simulation experimental data shown in FIG. 1(c). A function relationship between the conversion efficiency $\eta$ of the battery module and the charge/discharge rate $I_0$ of the battery module is a parabolic function.

In the battery module, higher conversion efficiency $\eta$ of the battery module indicates higher working efficiency of the battery module. A function relationship between the conversion efficiency $\eta$ of the battery module and the charge/discharge rate $I_0$ of the battery module is a parabolic function relationship. In an embodiment, as shown in FIG. (c), a value of $\eta$-$I_0$ in a shadow area indicates that the battery module is in an optimal charge/discharge state.

In the conventional technology, when a plurality of battery modules supply power to the load, the plurality of battery modules supply same electric energy. A charge/discharge rate $I_n$ of the battery module is as follows:

$$I_n = \frac{I}{n \cdot C_n}$$

Herein, n represents a quantity of battery modules, I represents a total current output by the plurality of battery modules, and $C_n$ represents a rated capacity of each battery module.

However, when the plurality of battery modules supply power to the load, the plurality of battery modules simultaneously supply electric energy. A larger quantity of battery modules indicates a smaller charge/discharge rate $I_n$ of each battery module. When the battery module works at a very low charge/discharge rate, the charge/discharge efficiency of the DC/DC converter is very low, and consequently, the conversion efficiency $\eta$ of the battery module is very low ($\eta = \eta_1{}^*\eta_2$, where $\eta_1$ represents the charge/discharge efficiency of the battery module, and $\eta_2$ represents the conversion efficiency of the DC/DC converter). In this case, a value of $\eta$-$I_0$ of the battery module is on a left side of the value of $\eta$-$I_0$ in the shadow area in FIG. 1(c), and the battery module is not in the optimal charge/discharge state.

To resolve a disadvantage that an existing battery module cannot be in an optimal charge/discharge state with a quantity change, embodiments of this application provide a power supply management system, a power system, a power device, and a management method.

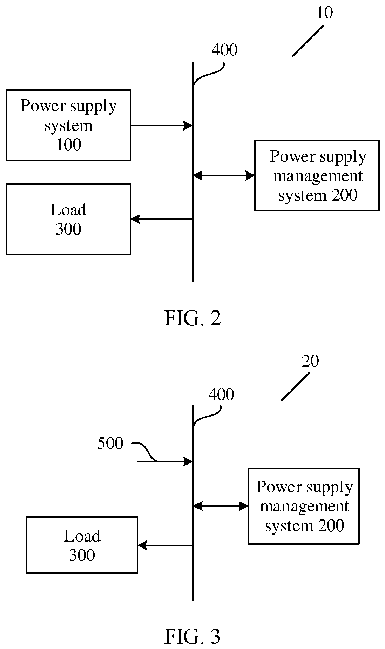

FIG. 2 is a schematic diagram of an architecture of a power system according to an embodiment of this application. As shown in FIG. 2, the power system 10 includes a power supply system 100, a power supply management system 200, a load 300, and an input/output busbar 400. The power supply system 100, the power supply management system 200, and the load 300 may be electrically connected by using the input/output busbar 400.

The power supply system 100 may be a mains system, a photovoltaic power generation system, a wind power generation system, a hydropower generation system, a tidal energy power generation system, or another power system. In embodiments of this application, the power supply system 100 is preferably a photovoltaic power generation system. In an embodiment, the power supply system 100 may supply power to the load 300. The power supply system 100 may supply power to the power supply management system 200. The power supply system 100 may supply power to both the power supply management system 200 and the load 300.

A battery pack of a battery module of the power supply management system 200 may be a lithium battery, a sodium ion battery, an all-vanadium flow battery, a sulfur-selenium battery, or another type of battery. In this embodiment of this application, the battery pack of the battery module of the power supply management system 200 is preferably a lithium battery.

The load 300 may be a direct current load, a direct current input terminal of an inverter, or another device. In an embodiment, the load 300 may be powered by the power supply system 100. The load 300 may be powered by the power supply management system 200. The load 300 may be jointly powered by the power supply system 100 and the power supply management system 200.

FIG. 3 is a schematic diagram of an architecture of a power device according to an embodiment of this application. As shown in FIG. 3, a power device 20 includes a power supply management system 200, a load 300, an input/output busbar 400, and a power interface 500. The power supply management system 200, the load 300, and the power interface 500 may be electrically connected by using the input/output busbar 400.

The power interface 500 may be a metal cable, a copper bar, a backplane, a type-C interface, a USB port, a lightning interface, a SATA power interface, or another interface. In this embodiment of this application, the power interface 500 is electrically connected to an external power supply system, so that the power interface 500 and the external power supply system may be equivalent to the power supply system 100 of the power system 10 in FIG. 2, and may supply power to the power device 20.

This application provides a power supply management system 200, including a plurality of battery modules and a monitoring module. Each battery module includes a BMS, a DC/DC converter, and at least one battery pack. The BMS is electrically connected to both the DC/DC converter and the at least one battery pack, and is configured to: control the DC/DC converter to convert a direct current output by the at least one battery pack into a direct current at a specified voltage, and/or convert an external direct current into a direct current at a specified voltage, and supply power to the at least one battery pack. The monitoring module is communicatively connected to the BMSs of the plurality of battery modules, and is configured to: when discharge rates of the plurality of battery modules are less than a first specified threshold, decrease a quantity of battery modules that are being discharged; and/or when charge rates of the plurality of battery modules are less than a second specified threshold, decrease a quantity of battery modules that are being charged.

The first specified threshold is related to a discharge rate during discharging of the battery module and conversion efficiency during discharging of the battery module. Generally, a smaller discharge rate indicates more sufficient conversion between chemical energy and electric energy of battery cells of the plurality of battery packs of the battery module. Higher conversion efficiency during discharging of the battery module indicates a smaller electric energy loss of the battery module. Because of a fixed loss of the DC/DC converter, a function relationship between the conversion efficiency and the discharge rate during discharging of the battery module is a parabolic function. Therefore, the first specified threshold may be a discharge rate $I_n$ corresponding to an extremum point of a parabolic function between the conversion efficiency and the discharge rate during discharging of the battery module, or a value near the discharge rate $I_n$. For example, the first specified threshold may be a value between 0.95 $I_n$ and 1.05 $I_n$. In an embodiment, the first specified threshold is a minimum value of a discharge rate in the shadow area in FIG. 1(c). The first specified threshold may be 0.05C.

The second specified threshold is related to a charge rate during charging of the battery module and conversion efficiency during charging of the battery module. Generally, a smaller charge rate indicates more sufficient conversion between chemical energy and electric energy of battery cells of the plurality of battery packs of the battery module. Higher conversion efficiency during charging of the battery module indicates a smaller electric energy loss of the battery module. Because of a fixed loss of the DC/DC converter, a function relationship between the conversion efficiency and the charge rate during charging of the battery module is a parabolic function. Therefore, the second specified threshold may be a charge rate $I_n$ corresponding to an extremum point of a parabolic function between the conversion efficiency and the charge rate during charging of the battery module, or a value near the charge rate $I_n$. For example, the second specified threshold may be a value between 0.95 $I_n$ and 1.05 $I_n$. In an embodiment, the second specified threshold is a minimum value of a charge rate in the shadow area in FIG. 1(c). The second specified threshold may be 0.05C.

In this embodiment of this application, when the power supply management system 200 supplies power to the load, the monitoring module controls each battery module to be discharged. The monitoring module detects the discharge rate of each battery module, and determines that the battery module is not in an optimal discharge state when the discharge rate of the battery module is less than the first specified threshold. The monitoring module may decrease a quantity of battery modules that are being discharged and increase discharge rates of other battery modules that are being discharged. In this way, the other battery modules that are being discharged are in the optimal discharge state.

When each battery module of the power supply management system 200 is charged, the monitoring module controls each battery module to be charged. The monitoring module detects the charge rate of each battery module, and determines that the battery module is not in an optimal charge state when the charge rate of the battery module is less than the second specified threshold. The monitoring module decreases a quantity of battery modules that are being charged and increases charge rates of other battery modules that are being charged. In this way, the other battery modules that are being charged are in the optimal charge state.

In an embodiment, the battery management system is further configured to: when it is detected that an output electrical signal of the battery module that is being discharged is less than a third specified threshold, power on a power switching transistor, an inductor, and a transformer of a direct current/direct current converter of a battery module in a sleep mode. The monitoring module enables the battery module in the sleep mode to exit the sleep mode in a communication wake-up manner, because communication delay time of the monitoring module is long, or even a communication link is disconnected, a voltage of a discharge port of the battery module may not be rapidly increased after being decreased, and the load powered by the power supply management system may not work or even be directly turned off. This reduces reliability of the power supply management system. The battery module in the sleep mode may actively detect a voltage of a discharge output port, and when the voltage of the discharge output port is less than a specified threshold, may actively enable the direct current/direct current converter to work, so that the battery module supplies power. In this way, reaction time of the power supply management system is increased, and reliability of the power supply management system is improved. The output electrical signal may be a voltage, a current, or another electrical parameter. In an embodiment, when the output electrical signal is a voltage, the third specified threshold is a voltage value. The third specified threshold is related to a power supply load of the power supply management system 200. In an embodiment, the third specified threshold is a rated voltage at which the power supply management system 200 supplies power.

In an embodiment, when determining that the discharge rates of the plurality of battery modules are greater than a fourth specified threshold, the monitoring module may generate a management signal, and send the management signal to another management unit. The another management unit may enable, based on the management signal, another power supply system to supply a part or all of electric energy to the load. The another power supply system may be the State Grid, an energy storage device, or another system that supplies electric energy. After power of the load supplied by the power supply management system 200 is reduced, a discharge rate of each battery module of the power supply management system 200 is decreased, so that the battery module that is being discharged is in the optimal discharge state. The fourth specified threshold is related to the discharge rate during discharging of the battery module and the conversion efficiency during discharging of the battery module. Generally, a smaller discharge rate indicates more sufficient conversion between chemical energy and electric energy of battery cells of the plurality of battery packs of the battery module. Higher conversion efficiency during discharging of the battery module indicates a smaller electric energy loss of the battery module. Because of a fixed loss of the DC/DC converter, a function relationship between the conversion efficiency and the discharge rate during discharging of the battery module is a parabolic function. Therefore, the fourth specified threshold may be a discharge rate $I_n$ corresponding to an extremum point of a parabolic function between the conversion efficiency and the discharge rate during discharging of the battery module, or a value near the discharge rate $I_n$. For example, the first specified threshold may be a value between $0.95 I_n$ and $1.05 I_n$. In an embodiment, the fourth specified threshold is a maximum value of a discharge rate in the shadow area in FIG. 1(c). The fourth specified threshold may be 0.3C.

In an embodiment, the monitoring module detects a SOH of the battery module. When determining that the SOH of the battery module that is being discharged is less than a fifth specified threshold, the monitoring module enables the battery module whose SOH is less than the fifth specified threshold to stop being discharged, and enables a battery module that is not being discharged to be discharged. The monitoring module may preferably select, based on the SOH of the battery module, a battery module with a larger SOH to supply power to the load, so that SOHs of the battery modules of the power supply management system 200 are consistent, to improve reliability of the power supply management system 200. Generally, a smaller SOH of the battery module indicates a larger quantity of charge/discharge times of the battery pack of the battery module. A larger quantity of charge/discharge times of the battery pack of the battery module indicates a smaller rated capacity of the battery pack of the battery module. The fifth specified threshold may be a quantity of charge/discharge times of a battery pack, a related capacity of which is constant, of the battery module. In another embodiment, the fifth specified threshold is generally 70% to 80% of a total SOH of the battery module. The fifth specified threshold may be freely set based on an application scenario of the battery module.

In an embodiment, the monitoring module detects SOCs of a plurality of battery modules. When determining that the SOC of the battery module that is being discharged is less than a sixth specified threshold, the monitoring module enables the battery module whose SOC is less than the sixth specified threshold to stop being discharged, and enables a battery module that is not being discharged to be discharged. When the SOC of the battery module is less than a specified threshold, the battery module may stop being discharged. To avoid a problem such as power-off or voltage fluctuation of the power supply management system 200 after the SOC of the battery module is reduced to 0 (that is, all power is discharged), the monitoring module wakes up the battery module in the sleep mode in advance to be discharged, and enables the battery module whose SOC is less than the specified threshold to stop being discharged. Generally, when the SOC of the battery module is low, a voltage during discharging of the battery module may be lower than a rated voltage of the battery module, or may be zero. Therefore, the sixth specified threshold may be the SOC of the rated voltage output by the battery module. In another embodiment, the sixth specified threshold is generally 5% to 20% of a total SOC of the battery packs of the battery module. The sixth specified threshold may be freely set based on an application scenario of the battery module.

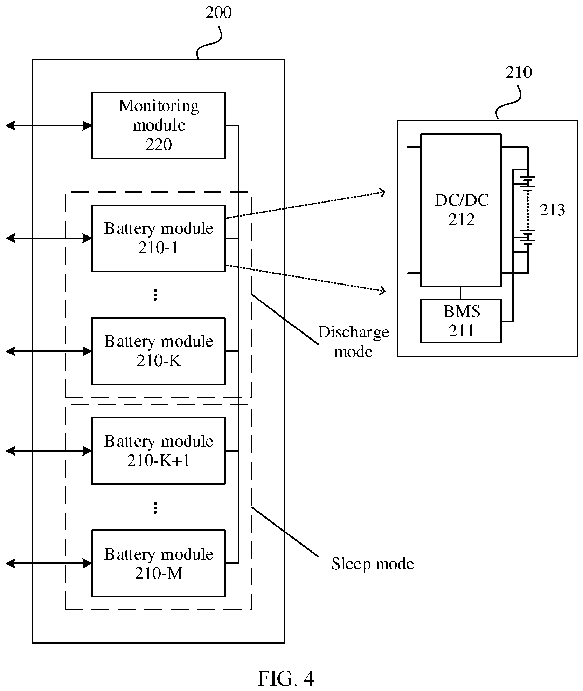

FIG. 4 is a schematic diagram of an architecture of a power supply management system 200 according to an embodiment of this application. As shown in FIG. 4, the power supply management system 200 includes a plurality of battery modules 210 and a monitoring module 220. The battery module 210 includes a BMS 211, a DC/DC converter 212, and a plurality of battery packs 213. The plurality of battery modules are a battery module 210-1, ..., a battery module 210-K, a battery module 210-K+1, ..., and a battery module 210-M. K is a positive integer greater than 1. M is a positive integer greater than 2.

The monitoring module 220 establishes communication connections to the BMSs 211 of the plurality of battery modules 210. The BMS 211 separately establishes a communication connection to each of the DC/DC converter 212 and the plurality of battery packs 213. The plurality of battery packs 213 of the battery module 210 are electrically connected to the input/output busbar 400 by using the DC/DC converter 212. In an embodiment, the DC/DC converter 212 may be disposed inside the battery module 210. In an embodiment, the DC/DC converter 212 may be disposed outside the battery module 210. An output terminal of the battery module 210 is electrically connected to the input/output busbar 400 by using the DC/DC converter 212.

In this application, the plurality of battery modules 210 are the same. In other words, a total rated capacity of the plurality of battery packs 213 of the plurality of battery modules 210 is the same. When the power supply management system 200 is charged or discharged, charge/discharge rates of the plurality of battery modules 210 of the power supply management system 200 are the same. In another embodiment, the plurality of battery modules 210 of the power supply management system 200 may be different battery modules. In an embodiment, when the power supply management system 200 is charged or discharged, the monitoring module 220 may control, based on the total rated capacity of the plurality of battery modules 210, the plurality of battery modules 210 to be charged or discharged at a same charge/discharge rate. The monitoring module 220 enables the battery modules 210 with different rated capacities to be charged or discharged at a same charge/discharge rate, so that the monitoring module 220 manages the battery modules 210 in a unified manner. This reduces control difficulty of the monitoring module 220.

When the power supply management system 200 supplies power to a load, the monitoring module 220 may control all battery modules 210 of the power supply management system 200 to be discharged. The monitoring module 220 may use a current equalization manner to enable the plurality of battery modules 210 of the power supply management system 200 to be discharged at a same discharge rate. In this case, the discharge rates of the plurality of battery modules 210 of the power supply management system 200 are $I_1 = I_2 = ... = I_M = I_0/n_M$. In another embodiment, when there are a large quantity of battery modules 210 of the power supply management system 200, the monitoring module 220 may control a part of battery modules 210 of the power supply management system 200 to be discharged, so as to prevent the monitoring module 220 from invoking a large quantity of battery modules 210 to discharge. Frequent operation of the battery module 210 causes a decrease in a SOH of the battery module 210.

The monitoring module 220 may detect values of the discharge rates $I_M$ of the plurality of battery modules 210 of the power supply management system 200, and determine whether the discharge rates of the battery modules 210 are within a specified range. The specified range is a discharge rate range in which the plurality of battery modules 210 of the power supply management system 200 are in an optimal charge/discharge state. That is, the specified range is a value range of a discharge rate in the shadow area in FIG. 1(c). An upper limit value of the specified range refers to a maximum value of the discharge rate in the shadow area in FIG. 1(c). A lower limit value of the specified range refers to a minimum value of the discharge rate in the shadow area in FIG. 1(c).

In this application, when the monitoring module 220 determines that the discharge rates of the plurality of battery modules 210 of the power supply management system 200 are within the specified range, the plurality of battery modules 210 of the power supply management system 200 are in the optimal charge/discharge state. In this case, the monitoring module 220 may control the battery module 210 that is being discharged to continue supplying power to the load.

In this application, when the monitoring module 220 determines that the discharge rates $I_M$ of the plurality of battery modules 210 of the power supply management system 200 are greater than the upper limit value of the specified range, the plurality of battery modules 210 of the power supply management system 200 are not in the optimal charge/discharge state. In this case, the monitoring module 220 may control the battery module 210 that is being discharged to continue supplying power to the load.

In an embodiment, the monitoring module 220 may send a management signal to the power device 200 or another management unit. The management signal indicates the power device 200 or another management unit to invoke another power supply system to supply a part or all of electric energy to the load. When both the another power supply system and the power supply management system 200 supply power to the load, electric energy supplied by the power supply management system 200 is reduced, so that the discharge rates $I_M$ of the plurality of battery modules 210 of the power supply management system 200 can be decreased to the specified range.

In another embodiment, the monitoring module 220 may determine, based on power $P_1$ of the load, the discharge rates $I_M$ of the plurality of battery modules 210 of the power supply management system 200, and an upper limit value $I_{max}$ of the specified range, minimum power $P_{min}$ at which the another power supply system supplies electric energy. Specifically:

$$P_{min} = P_1 - P_2 = \mathrm{n}C_n(I_M - I_{max}) \cdot U$$

$P_2$ represents output power of the power supply management system 200 in the optimal charge/discharge state, n represents a quantity of battery modules of the power supply management system 200, $C_n$ represents a total rated capacity of the battery modules, and U represents an output voltage of the power supply management system 200.

In an embodiment, when there is a battery module 210 in a sleep mode or a deep sleep mode in the power supply management system 200, the monitoring module 220 may control the battery module 210 in the sleep mode or the deep sleep mode to be discharged. After a quantity of battery modules 210 that are of the power supply management system 200 and that are being discharged is increased, the discharge rates $I_M$ of the plurality of battery modules 210 of the power supply management system 200 may be decreased to the specified range.

In another embodiment, the monitoring module 220 may determine, based on the power $P_1$ of the load, a quantity $n_M$ of battery modules 210 that are of the power supply management system 200 and that are being discharged, and the upper limit value $I_{max}$ of the specified range, a minimum quantity $n_{min}$ of battery modules 210 that need to be additionally arranged. Specifically:

$$n_{min} = \frac{P_1}{I_{max}C_nU} - n_M$$

In this application, when the monitoring module 220 determines that the discharge rates $I_M$ of the plurality of battery modules 210 of the power supply management system 200 are less than the lower limit value of the specified range, the plurality of battery modules 210 of the power supply management system 200 are not in the optimal charge/discharge state. In this case, the monitoring module 220 may control a part of the battery modules 210 that are being discharged to stop being discharged. After the quantity of battery modules 210 that are of the power supply management system 200 and that are being discharged is decreased, the discharge rate $I_M$ of the battery module 210 that is being discharged is increased, and the discharge rate $I_M$ of the battery module 210 that is of the power supply management system 200 and that is being discharged can be increased to the specified range.

In another embodiment, the monitoring module 220 may determine, based on the power $P_1$ of the load, the quantity $n_M$ of battery modules 210 that are of the power supply management system 200 and that are being discharged, and a lower limit value $I_{min}$ of the specified range, a minimum quantity $n_{min}$ of battery modules 210 that need to be reduced. Specifically:

$$n_{min} = n_M - \frac{P_1}{I_{min}C_nU}$$

In this embodiment of this application, the monitoring module 220 may enable the battery module 210 to be in a working mode, a sleep mode, or a deep sleep mode. The working mode is a mode in which the battery module 210 performs charging or discharging. In this case, the DC/DC converter of the battery module 210 controlled by the monitoring module 220 is in the working mode and has a large quantity of fixed losses, for example, a power switching transistor of the DC/DC converter performs high-frequency switching, a transformer of the DC/DC converter generates an excitation current, a normally open contact of a relay or a contactor of the DC/DC converter maintains a closed state, and an MCU that is of the BMS 211 and controls the DC/DC converter works at a high frequency.

The sleep mode is a mode in which the battery module 210 does not actively perform charging or discharging. Compared with a fixed loss that exists when the monitoring module 220 maintains the battery module 210 in the working mode, the fixed loss exists when the DC/DC converter that is of the monitoring module 220 and that controls the battery module 210 to be in the sleep mode is reduced. For example, the power switching transistor of the DC/DC converter does not perform high-frequency on/off switching, and the transformer of the DC/DC converter does not generate an excitation current. Electric energy consumed by the monitoring module 210 to maintain the battery module 210 in the sleep mode is reduced, so that conversion efficiency of the power supply management system 200 can be improved.

In this case, the normally open contact of the relay or the contactor of the DC/DC converter 212 maintains a closed state, and a sampling channel of the MCU works normally. When the load is suddenly increased to exceed maximum output power of the battery module 210 that is being discharged, the battery module in the sleep mode does not depend on control of the monitoring module 220. After detecting a voltage drop of the input/output busbar 400, the BMS 211 quickly and automatically wakes up and switches to a normal discharge mode, to ensure power supply reliability of the power supply system.

The deep sleep mode is a mode in which the battery module 210 passively performs charging or discharging. Compared with the fixed loss that exists when the monitoring module 220 maintains the battery module 210 in the sleep mode, a fixed loss exists when the DC/DC converter that is of the monitoring module 220 and that controls the battery module 210 to be in the deep sleep mode is reduced. For example, the normally open contact of the relay or the contactor of the DC/DC converter is disconnected, the MCU works at a low frequency, the MCU disables a computing core, other peripherals, and the like. Electric energy consumed by the monitoring module 220 to maintain the battery module 210 in the deep sleep mode is reduced, so that conversion efficiency of the power supply management system 200 can be further improved.

In this case, because the normally open contact of the relay or the contactor of the DC/DC converter is disconnected, the battery module 210 in the deep sleep mode cannot automatically wake up to enter the normal discharge mode, but needs to be woken up by the monitoring module 220 in a communication manner. As shown in FIG. 4, the monitoring module 220 controls the battery module 210-1, ..., and the battery module 210-K to be in the working mode. When the power supply management system 200 supplies power to the load, the K battery modules 210 are discharged. Discharge rates of the plurality of battery modules 210 of the power supply management system 200 are $I_1 = I_2 = ... = I_K = I_0/n_K$. In addition, the discharge rate $I_0/n_K$ of the battery module 210 is within the specified range of the discharge rate in the optimal charge/discharge state. Preferably, the specified range of the discharge rate of the optimal charge/discharge state of the battery module 210 is 0.05C to 0.3C.

The monitoring module 220 controls the battery module 210-K+1, ..., and the battery module 210-M to be in the sleep mode. When the power supply management system 200 supplies power to the load, (M-K) battery modules 210 are in the sleep mode. Discharge rates of the plurality of battery modules 210 of the power supply management system 200 are $I_{K+1} = I_{K+2} = ... = I_M = 0$. In this case, a fixed loss exists when the DC/DC converter that is of the monitoring module 220 and that controls the $(K+1)^{th}$ battery module 210 to the $M^{th}$ battery module 210 to be in the sleep mode is reduced, so that conversion efficiency of the power supply management system 200 can be improved.

When the load powered by the power supply management system 200 is increased, and a part of the first battery module 210 to the $K^{th}$ battery module 210 are abnormal, or the like, output power of the plurality of battery modules 210 that are of the power supply management system 200 and that are being discharged is increased, and consequently, the discharge rates of the plurality of battery modules 210 of the power supply management system 200 are increased. The discharge rates of the plurality of battery modules 210 of the power supply management system 200 may exceed the specified range of the discharge rate of the battery module 210 in the optimal charge/discharge state.

In an embodiment, when the monitoring module 220 detects that the discharge rate of the battery module 210 that is of the power supply management system 200 and that is being discharged exceeds the specified range, the monitoring module 220 determines, based on power of the load, a quantity of battery modules 210 that are of the power supply management system 200 and that are being discharged, and an upper limit value of the specified range, a quantity of the battery modules 210 that need to be additionally arranged. The monitoring module 220 controls a corresponding quantity of battery modules 210 in the sleep mode to quickly exit the sleep mode and switch to the working mode. After the monitoring module 220 increases a quantity of battery modules 210 in the working mode, the discharge rates of the plurality of battery modules 210 are decreased, so that the discharge rates $I_M$ of the plurality of battery modules 210 of the power supply management system 200 can be decreased to the specified range.

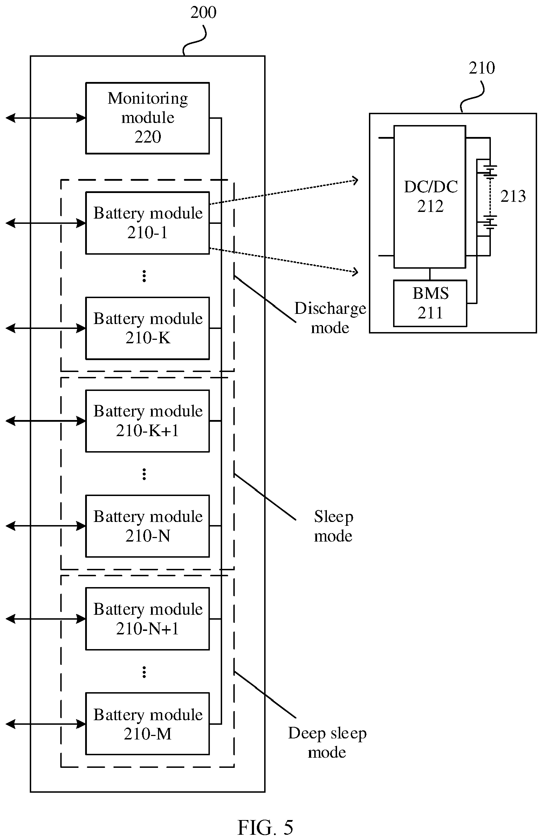

As shown in FIG. 5, the monitoring module 220 controls a part of battery modules 210 in the sleep mode to be in the deep sleep mode. For example, the battery module 210-K+1, ..., and the battery module 210-N are in the sleep mode, and the battery module 210-N+1, ..., and the battery module 210-M are in the deep sleep mode. N is a positive integer greater than 2, and N is less than M. A fixed loss exists when the DC/DC converter that is of the monitoring module 220 and that controls the $(N+1)^{th}$ battery module 210 to the $M^{th}$ battery module 210 to be in the deep sleep mode is reduced, so that the power supply management system 200 consumes less electric energy, and conversion efficiency of the power supply management system 200 can be further improved.

In an embodiment, when the monitoring module 220 controls the battery module 210 to be in the deep sleep mode, the MCU may reduce a working frequency, disable a computing kernel, disable a part of sampling channels or peripherals, retain only an internal low-frequency clock and a communication bus wake-up function, or set a timing wake-up condition of a real time clock (real time clock, RTC). When an external wake-up signal appears on the communication bus, or a count of the RTC timer reaches a specified threshold, the MCU may be woken up. The MCU may enable the battery module 210 to switch from the deep sleep mode to the sleep mode or the working mode. The monitoring module 220 controls the battery module 210 in the sleep mode to switch to the working mode, and to perform charging or discharging.

In this application, the monitoring module 220 may detect the SOH value of the battery module 210. The SOH represents a percentage of states of health of the plurality of battery packs 213 of the battery module 210. A larger quantity of charge/discharge times of the battery pack 213 indicates a smaller SOH value. In an embodiment, the monitoring module 220 may preferably select, based on the SOH value of the battery module 210, a battery module 210 with a larger SOH value to supply power to the load, so that SOHs of the plurality of battery modules 210 of the power supply management system 200 are consistent. This improves reliability of the power supply management system 200. In an embodiment, the monitoring module 220 may preferably select a battery module 210 with a smaller SOH value to be in the sleep mode, so as to avoid a case in which the SOH value becomes smaller, and reliability of the power supply management system 200 is reduced as the battery module 210 is frequently charged and discharged for a long time.

In this application, the monitoring module 220 may detect the SOC of the battery module 210. The SOC is a physical quantity used to reflect a status of remaining capacities of the plurality of battery packs of the battery module 210, and a value of the SOC is defined as a ratio of the remaining capacities of the battery packs to a total capacity of the plurality of battery packs of the battery module 210. A smaller battery level of the battery module 210 indicates that a voltage output by the battery module 210 continuously decreases, and a smaller SOC. The monitoring module 220 may determine whether the SOC of the battery module 210 that is being discharged is less than a specified threshold. In an embodiment, when the SOC of the battery module 210 is not less than the specified threshold, the monitoring module 220 may not need to switch the battery module 210. In an embodiment, when the SOC of the battery module 210 is less than the specified threshold, the battery module 210 may stop being discharged. To avoid a problem such as power-off or voltage fluctuation that occurs in the battery module 210 after the SOC of the battery module 210 is reduced to 0, the monitoring module 220 wakes up the battery module 210 in the sleep mode in advance to be discharged, and enables the battery module 210 whose SOC is less than the specified threshold to stop being discharged.

In this embodiment of this application, the monitoring module 220 of the power supply management system 200 may determine, based on power of the load, a quantity of battery modules, and a specified range of the discharge rate of the battery module 210, that a corresponding quantity of battery modules 210 of the power supply management system 200 are in the working mode, and supply power to the load. The power supply management system 200 controls another battery module 210 to be in the sleep mode or the deep sleep mode, so that electric energy consumption of the power supply management system 200 can be reduced, and conversion efficiency of the power supply management system 200 can be improved.

It should be noted that, when the power supply management system 200 charges the plurality of battery modules 210, the monitoring module 220 enables all the battery modules 210 of the power supply management system 200 to be charged, and detects charge rates of the plurality of battery modules 210. When determining that the charge rate of the battery module 210 is less than the lower limit value of the specified range, the monitoring module 220 may calculate, based on charge power and the lower limit value of the specified range of the charge rate of the battery module 210, a quantity of battery modules 210 that are of the power supply management system 200 and that are charged, and enable a battery module 210 that is not charged to switch to the sleep mode or the deep sleep mode, so that electric energy consumption of the power supply management system 200 can be reduced, and charge conversion efficiency of the power supply management system 200 can be improved. It can be learned that a charging process and a discharging process of the power supply management system 200 are basically similar. For details, refer to the technical solutions described in FIG. 1 to FIG. 7.

It should be noted that, a power supply system 100 of the power system 10 is a limited energy source, for example, a photovoltaic power generation system. In this case, when the plurality of battery modules 210 of the power supply management system 200 are charged, conversion efficiency of the power supply management system 200 is high, so that charge time of the plurality of battery modules 210 of the power supply management system 200 can be shortened, and a quantity of configured photovoltaic panels can be decreased. When the plurality of battery modules 210 of the power supply management system 200 are discharged, conversion efficiency of the power supply management system 200 is high, so that a quantity of configured battery modules 210 of the power supply management system 200 can be decreased. Both cases can reduce CAPEX of clients.

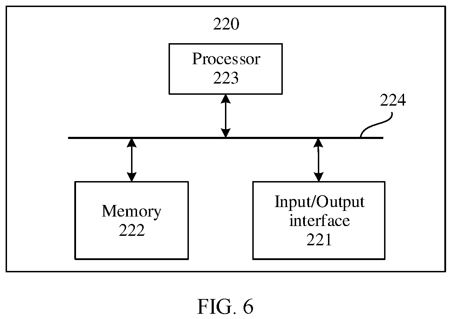

FIG. 6 is a schematic diagram of an architecture of a monitoring module according to an embodiment of this application. As shown in FIG. 6, the monitoring module 220 includes an input/output interface 221, a memory 222, a processor 223, and a bus 224. The input/output interface 221, the memory 222, and the processor 223 may establish a communication connection by using the bus 224. The processor 223 may be the MCU mentioned above, or may be another device having a processing function, for example, a central processing unit (central processing unit, CPU) or a digital signal processing (digital signal processing, DSP) unit.

The input/output interface 221 is configured to establish a communication connection to the battery module 210 and the DC/DC converter 212, to implement data transmission and control instruction sending between the monitoring module 220 and the battery module 210 and the DC/DC converter 212. The input/output interface 221 may be a network cable, a flat cable, a twisted wire, a pin, a printed circuit board (printed circuit board, PCB), or an interface of another type.

The memory 222 may include a volatile memory (volatile memory), for example, a random-access memory (random-access memory, RAM). Alternatively, the memory 222 may include a non-volatile memory (non-volatile memory), for example, a read-only memory (read-only memory, ROM), a flash memory, a hard disk drive (hard disk drive, HDD), or a solid-state drive (solid-state drive, SSD). The memory 222 may be a combination of the foregoing memories. In this embodiment of this application, the memory 222 may be used as a database, and is configured to store data such as a sequence number of the battery module 210 and an optimal conversion efficiency-charge/discharge rate interval of the power supply management system 200. The memory 222 is configured to store an application program run by the processor 223, so that the processor 223 can perform a battery management method. The memory 222 may further have another function. This is not limited in this application.

The processor 223 may be a unit having a processing function in the detection module 210, and is configured to: receive data of the input/output interface 221 and perform the battery management method.

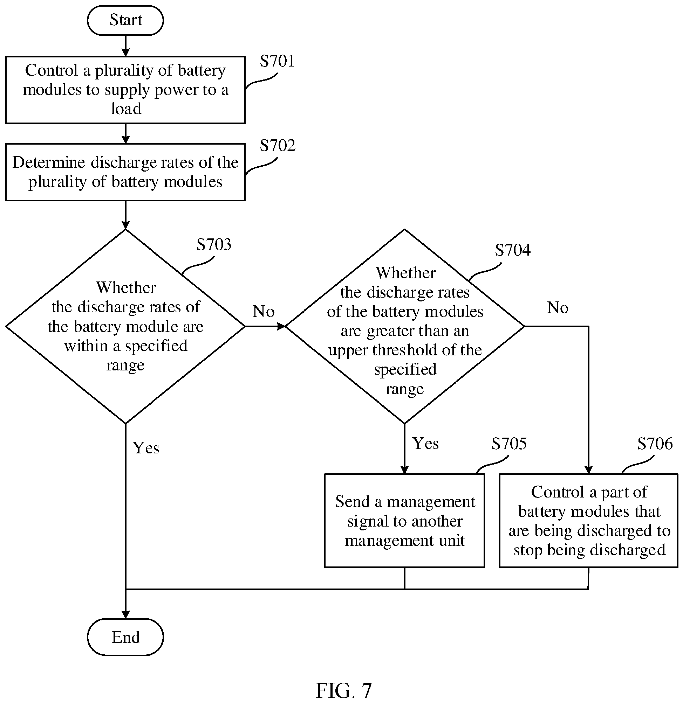

FIG. 7 is a flowchart of a battery management method according to an embodiment of this application. As shown in FIG. 7, the method is executed by a processor 223, and a specific implementation process is as follows.

Step S701: The processor 223 controls a plurality of battery modules 210 of a power supply management system 200 to supply power to a load.

In this application, the plurality of battery modules 210 of the power supply management system 200 are the same. In other words, the plurality of battery modules 210 of the power supply management system 200 have a same rated capacity. When the power supply management system 200 is discharged, discharge rates of the plurality of battery modules 210 of the power supply management system 200 are the same. In another embodiment, when there are a large quantity of battery modules 210 of the power supply management system 200, the processor 223 may control a part of battery modules 210 of the power supply management system 200 to be discharged, so as to avoid a decrease, caused by frequent operation of the large quantity of battery modules 210, in a SOH of the battery module 210.

When the power supply management system 200 supplies power to the load, the processor 223 may send a control instruction to the battery module 210, so that the battery module 210 is discharged. The processor may send a control instruction to a DC/DC converter 212, so that the DC/DC converter 212 outputs a direct current at a specified voltage.

In this application, the processor 223 may use a current equalization manner to enable the plurality of battery modules 210 of the power supply management system 200 to be discharged at a same discharge rate, so that the processor 223 manages the battery modules 210 in a unified manner. This reduces control difficulty of the monitoring module 220.

Step S702: The processor 223 determines discharge rates of the plurality of battery modules 210.

The processor 223 may collect discharge currents of the plurality of battery modules 210, and may calculate the discharge rates of the plurality of battery modules 210 based on a rated capacity that is of each battery module 210 and that is stored in the processor 223.

The processor 223 may use a current equalization manner to enable the plurality of battery modules 210 of the power supply management system 200 to be discharged at a same discharge rate. In this case, the discharge rates of the plurality of battery modules 210 of the power supply management system 200 are $I_1=I_2=...=I_M=I_0/n_M$. In another embodiment, the plurality of battery modules 210 of the power supply management system 200 are different battery modules 210. When the power supply management system 200 is charged or discharged, the processor 223 may control, based on a total rated capacity of the plurality of battery modules 210, the plurality of battery modules 210 to be charged or discharged at a same charge/discharge rate. The processor 223 enables the battery modules 210 with different rated capacities to be charged or discharged at a same charge/discharge rate, so that the processor 223 manages the battery modules 210 in a unified manner. This reduces control difficulty of the monitoring module 220. In an embodiment, the processor 223 may collect a total output current of the power supply management system 200, and may calculate, based on a quantity of battery modules 210 that are being discharged, and a rated capacity of the battery module 210 that is being discharged, the discharge rates of the plurality of battery modules 210.

Step S703: The processor 223 determines whether the discharge rate of the battery module 210 is within a specified range. When the discharge rate of the battery module 210 is not within the specified range, the processor 223 performs step S704. When the discharge rate of the battery module 210 is within the specified range, the processor 223 may not perform processing subsequently.

After determining values of the discharge rates of the plurality of battery modules 210, the processor 223 determines whether the discharge rates of the plurality of battery modules 210 are within the specified range. When the discharge rate of the battery module 210 is within the specified range, the battery module 210 is in an optimal discharge state. That is, the specified range is a value range of a discharge rate in the shadow area in FIG. 1(c). An upper limit value of the specified range refers to a maximum value of the discharge rate in the shadow area in FIG. 1(c). A lower limit value of the specified range refers to a minimum value of the discharge rate in the shadow area in FIG. 1(c).

In this application, when the processor 223 determines that the discharge rate of the battery module 210 that is supplying power is within the specified range, the battery module 210 that is supplying power is in the optimal charging/discharging state. In this case, the processor 223 may control the battery module 210 that is being discharged to continue supplying power to the load.

Step S704: The processor 223 determines whether the discharge rate of the battery module 210 is greater than an upper threshold of the specified range. When the discharge rate of the battery module 210 is greater than the upper threshold of the specified range, the processor 223 performs step S705. When the discharge rate of the battery module 210 is not greater than the upper threshold of the specified range, the processor 223 performs step S706.

Step S705: The processor 223 sends a management signal to another management unit.

When the processor 223 determines that the discharge rates of the plurality of battery modules 210 of the power supply management system 200 are not within the specified range, the processor 223 determines whether the discharge rates of the plurality of battery modules 210 of the power supply management system 200 are greater than an upper limit value of the specified range of the discharge rate of the battery module 210. When the processor 223 determines that the discharge rates of the plurality of battery modules 210 of the power supply management system 200 are greater than the upper limit value of the specified range, the plurality of battery modules 210 of the power supply management system 200 are not in the optimal charge/discharge state. In this case, the processor 223 may control the battery module 210 that is being discharged to continue supplying power to the load.

In an embodiment, the processor 223 may send a management signal to the power device 200 or another management unit. The management signal indicates the power device 200 or another management unit to invoke another power supply system to supply a part or all of electric energy to the load. When both the another power supply system and the power supply management system 200 supply power to the load, electric energy supplied by the power supply management system 200 is reduced, so that the discharge rates of the plurality of battery modules 210 of the power supply management system 200 can be decreased to the specified range.

In another embodiment, the processor 223 may determine, based on power of the load, the discharge rates of the plurality of battery modules 210 of the power supply management system 200, and the upper limit value of the specified range, minimum power at which the another power supply system supplies electric energy.

In an embodiment, when there is a battery module 210 in a sleep mode or a deep sleep mode in the power supply management system 200, the processor 223 may control the battery module 210 in the sleep mode or the deep sleep mode to be discharged. After a quantity of battery modules 210 that are of the power supply management system 200 and that are being discharged is increased, the discharge rates of the plurality of battery modules 210 of the power supply management system 200 may be decreased to the specified range.

In another embodiment, the processor 223 may determine, based on the power of the load, a quantity of battery modules 210 that are of the power supply management system 200 and that are being discharged, and the upper limit value of the specified range, a minimum quantity of battery modules 210 that need to be additionally arranged.

Step S706: The processor 223 reduces the quantity of battery modules 210 that are being discharged.

In this application, when the processor 223 determines that the discharge rates of the plurality of battery modules 210 of the power supply management system 200 are less than a lower limit value of the specified range, the plurality of battery modules 210 of the power supply management system 200 are not in the optimal charge/discharge state. In this case, the processor 223 may control a part of the battery modules 210 that are being discharged to stop being discharged. After the quantity of battery modules 210 that are of the power supply management system 200 and that are being discharged is decreased, the discharge rate of the battery module 210 that is being discharged is increased, and the discharge rates of the plurality of battery modules 210 of the power supply management system 200 can be increased to the specified range.

In another embodiment, the processor 223 may determine, based on the power of the load, the quantity of battery modules 210 that are of the power supply management system 200 and that are being discharged, and the lower limit value of the specified range, a quantity of battery modules 210 that need to be reduced. The processor 223 switches the battery module 210 that does not work to the sleep mode and the deep sleep mode, so that electric energy consumption of the power supply management system 200 can be reduced, and conversion efficiency of the power supply management system 200 can be improved.

In this embodiment of this application, the processor 223 controls the plurality of battery modules 210 to supply power to the load, and calculates the discharge rates of the plurality of battery modules 210. When determining that the discharge rate of the battery module 210 is less than the lower limit value of the specified range, the processor 223 may calculate, based on the power of the load and the lower limit value of the specified range of the discharge rate of the battery module 210, a quantity of battery modules 210 that are of the power supply management system 200 and that are in the working mode, and enable a battery module 210 that is not in the working mode to switch to the sleep mode or the deep sleep mode, so that electric energy consumption of the power supply management system 200 can be reduced, and charge conversion efficiency of the power supply management system 200 can be improved.

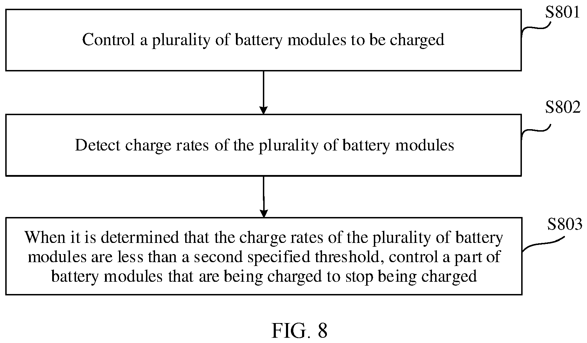

FIG. 8 is a flowchart of a battery management method according to an embodiment of this application. As shown in FIG. 8, the method is executed by a processor 223, and a specific implementation process is as follows.

Step S801: The processor 223 controls a plurality of battery modules of a battery module to be charged.

In this application, the plurality of battery modules 210 of the power supply management system 200 are the same. In other words, the plurality of battery modules 210 of the power supply management system 200 have a same rated capacity. When the power supply management system 200 is charged, charge rates of the plurality of battery modules 210 of the power supply management system 200 are the same. In another embodiment, when there are a large quantity of battery modules 210 of the power supply management system 200, the processor 223 may control a part of battery modules 210 of the power supply management system 200 to be charged, so as to avoid a decrease, caused by frequent operation of the large quantity of battery modules 210, in a SOH of the battery module 210.

When the battery module 210 of the power supply management system 200 is charged, the processor 223 may send a control instruction to the battery module 210, so that the battery module 210 is charged. The processor may send a control instruction to a DC/DC converter 212, so that the DC/DC converter 212 outputs a direct current at a specified voltage.

Step S802: The processor 223 detects charge rates of the plurality of battery modules.

The processor 223 may collect charge currents of the plurality of battery modules 210, and may calculate the charge rates of the plurality of battery modules 210 based on a rated capacity that is of each battery module 210 and that is stored in the processor 223.

The processor 223 may use a current equalization manner to enable the plurality of battery modules 210 of the power supply management system 200 to be charged at a same charge rate. In an embodiment, the processor 223 may collect a total input current of the power supply management system 200, and may calculate, based on a quantity of battery modules 210 that are being charged, and a rated capacity of the battery module 210 that is being charged, the charge rates of the plurality of battery modules 210.

Step S803: When determining that the charge rates of the plurality of battery modules are less than a specified threshold, the processor 223 decreases a quantity of battery modules that are being charged.

After detecting the charge rate of the battery module 210, the processor 223 determines whether the charge rate of the battery module 210 is less than a lower limit value of the specified range. In an embodiment, when determining that the charge rate of the battery module 210 is less than the lower limit value of the specified range, the processor 223 may calculate, based on charge power and the lower limit value of the specified range of the charge rate of the battery module 210, the quantity of battery modules 210 that are of the power supply management system 200 and that are being charged. The processor 223 may switch the battery module 210 that is not charged to a sleep mode or a deep sleep mode, so that electric energy consumption of the power supply management system 200 can be reduced, and conversion efficiency of the power supply management system 200 can be improved.

In this embodiment of this application, the processor 223 controls the plurality of battery modules 210 to be charged, and calculates the charge rates of the plurality of battery modules 210. When determining that the charge rate of the battery module 210 is less than the lower limit value of the specified range, the processor 223 may calculate, based on charge power and the lower limit value of the specified range of the charge rate of the battery module 210, the quantity of battery modules 210 that are of the power supply management system 200 and that are being charged. In addition, the processor 223 may switch another battery module 210 to the sleep mode or the deep sleep mode, so that electric energy consumption of the power supply management system 200 can be reduced, and conversion efficiency of the power supply management system 200 can be improved.

An embodiment of this application further provides a computer-readable storage medium, where the computer-readable storage medium stores a computer program. When the computer program is executed on a computer, the computer is enabled to perform any method recorded in FIG. 7 and FIG. 8 and corresponding description content.

An embodiment of this application further provides a computer program product, where the computer program product stores instructions, and when the instructions are executed by a computer, the computer is enabled to implement any method recorded in FIG. 7 and FIG. 8 and corresponding description content.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, the computer-readable medium may include, but is not limited to, a magnetic storage device (for example, a hard disk, a floppy disk, or a magnetic tape), an optical disc (for example, a CD or a DVD), a smart card, and a flash memory device (for example, an EPROM, a card, a stick, or a key driver). In addition, various storage media described in this specification may represent one or more devices and/or other machine-readable media that are configured to store information. The term "machine-readable media" may include but is not limited to a radio channel, and various other media that can store, contain and/or carry instructions and/or data.

In the foregoing embodiments, the monitoring module 220 shown in FIG. 6 may be implemented in whole or in part by using software, hardware, firmware, or any combination thereof. When software is used to implement embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of embodiments of this application essentially, or the part contributing to the current technology, or a part of the technical solutions may be implemented in a form of a software product. The computer software product is stored in a storage medium, and includes several instructions for instructing a computer device (which may be a personal computer, a server, or an access network device) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

## Claims

1. A power supply management system (200), comprising:

a plurality of battery modules (210), wherein each battery module comprises a battery management system (211), a direct current/direct current converter (212), and at least one battery pack (213); and the battery management system is electrically connected to both the direct current/direct current converter and the at least one battery pack, and is configured to: control the direct current/direct current converter to convert a direct current output by the at least one battery pack into a direct current at a specified voltage, and/or convert a received direct current into a direct current at a specified voltage, and supply power to the at least one battery pack; and

a monitoring module (220), communicatively connected to the battery management systems of the plurality of battery modules, and configured to: when discharge rates of the plurality of battery modules are less than a first specified threshold, control a part of battery modules that are being discharged to stop being discharged; and/or

when charge rates of the plurality of battery modules are less than a second specified threshold, control a part of battery modules that are being charged to stop being charged.

2. The power supply management system according to claim 1, wherein the discharge rates of the battery modules are the same, and/or the charge rates of the battery modules are the same.

3. The power supply management system according to claim 1 or 2, wherein the monitoring module is further configured to enable the battery module that stops being discharged or charged to be in a sleep mode, and the sleep mode is a mode in which a power switching transistor, an inductor, and a transformer that are of the direct current/direct current converter of the battery module and that control the battery pack to be discharged or charged are not powered on.

4. The power supply management system according to claim 3, wherein the battery management system is further configured to: when it is detected that an output electrical signal of the battery module that is being discharged is less than a third specified threshold, power on the power switching transistor, the inductor, and the transformer that are of the direct current/direct current converter of the battery module in the sleep mode.

5. The power supply management system according to claim 3 or 4, wherein the monitoring module is further configured to enable the battery module in the sleep mode to be in a deep sleep mode, wherein the deep sleep mode is a mode in which the power switching transistor, the inductor, and the transformer that are of the direct current/direct current converter of the battery module and that control the battery pack to be discharged or charged, and coils of a relay and a contactor are not powered on.

6. The power supply management system according to any one of claims 3 to 5, wherein the monitoring module is further configured to: when the discharge rate of the battery module that is being discharged is greater than a fourth specified threshold, send a wake-up signal to the battery module in the sleep mode, wherein the wake-up signal indicates the battery module in the sleep mode to supply electric energy to a load.

7. The power supply management system according to any one of claims 1 to 6, wherein the monitoring module is further configured to: when the discharge rates of the plurality of battery modules are greater than the fourth specified threshold, send a management signal to another power supply system, wherein the management signal indicates the another power supply system to supply electric energy to the load.

8. The power supply management system according to any one of claims 1 to 7, wherein the monitoring module is further configured to: detect states of health of the plurality of battery modules; and enable a battery module whose state of health is less than a fifth specified threshold to be in the sleep mode.

9. The power supply management system according to any one of claims 1 to 8, wherein the monitoring module is further configured to: detect states of charge of the plurality of battery modules; and enable a battery module whose state of charge is less than a sixth specified threshold to be in the sleep mode, and enable the battery module that is already in the sleep mode to supply electric energy to the load.

10. A battery management method, wherein a power supply management system comprises a plurality of battery modules and a monitoring module, the monitoring module is communicatively connected to the plurality of battery modules, and the method is executed by the monitoring module, and comprises:

controlling the plurality of battery modules to be discharged;

detecting discharge rates of the plurality of battery modules; and

when it is determined that the discharge rates of the plurality of battery modules are less than a first specified threshold, controlling a part of battery modules that are being discharged to stop being discharged.

11. The method according to claim 10, wherein the method further comprises:

when the discharge rate of the battery module that is being discharged is greater than a fourth specified threshold, sending a wake-up signal to a battery module in a sleep mode and/or a deep sleep mode, wherein the wake-up signal indicates the battery module in the sleep mode to supply electric energy to a load, and the sleep mode is a mode in which a power switching transistor, an inductor, and a transformer that are of a direct current/direct current converter and that control the battery module to be discharged or charged are not powered on; and the deep sleep mode is a mode in which the power switching transistor, the inductor, and the transformer that are of the direct current/direct current converter of the battery module and that control a battery pack to be discharged or charged, and coils of a relay and a contactor are not powered on.

12. The method according to claim 10, wherein the method further comprises:

when the discharge rates of the plurality of battery modules are greater than a fourth specified threshold, sending a management signal to another power supply system, wherein the management signal indicates the another power supply system to supply electric energy to a load.

13. A battery management method, wherein a power supply management system comprises a plurality of battery modules and a monitoring module, the monitoring module is communicatively connected to the plurality of battery modules, and the method is executed by the monitoring module, and comprises:

controlling the plurality of battery modules to be charged;

detecting charge rates of the plurality of battery modules; and

when it is determined that the charge rates of the plurality of battery modules are less than a second specified threshold, controlling a part of battery modules that are being charged to stop being charged.

14. A power system, comprising:

an input/output busbar (400);

at least one load (300), electrically connected to the input/output busbar;

at least one power supply management system (200) according to any one of claims 1 to 9, electrically connected to the input/output busbar, and configured to supply electric energy to the at least one load; and

a power supply system (100), electrically connected to the input/output busbar, and configured to supply electric energy to the at least one power supply management system and/or the at least one load.

15. A power device, comprising:

an input/output busbar (400);

at least one load (300), electrically connected to the input/output busbar;

at least one power supply management system (200) according to any one of claims 1 to 9, electrically connected to the input/output busbar, and configured to supply electric energy to the at least one load; and

at least one power interface (500), electrically connected to the input/output busbar, and configured to receive electric energy of another external power supply.

FIG. 1(a)

FIG. 1(b)

FIG. 1(c)

10

400

Power supply
system
100

Power supply
management
system 200

Load
300

FIG. 2

20

400

500

Power supply
management
system 200

Load
300

FIG. 3

200

210

Monitoring module 220

Battery module 210-1

⋮

Battery module 210-K

Discharge mode

Battery module 210-K+1

⋮

Battery module 210-M

Sleep mode

DC/DC 212

213

BMS 211

FIG. 4

FIG. 5

220

Processor
223

224

Memory
222

Input/Output
interface
221

FIG. 6

Start

Control a plurality of battery
modules to supply power to a
load — S701

Determine discharge rates of the
plurality of battery modules — S702

Whether
the discharge rates of
the battery module are
within a specified
range — S703

No →

Whether
the discharge rates
of the battery modules
are greater than an
upper threshold of the
specified
range — S704

No →

Yes ↓

Yes ↓ — S705

Send a management
signal to another
management unit

— S706

Control a part of
battery modules that
are being discharged to
stop being discharged

End

FIG. 7

Control a plurality of battery modules to be charged S801

Detect charge rates of the plurality of battery modules S802

When it is determined that the charge rates of the plurality of battery modules are less than a second specified threshold, control a part of battery modules that are being charged to stop being charged S803

FIG. 8